# EUROPEAN PATENT APPLICATION

(11) **EP 4 782 367 A1**
(43) Date of publication of application: **29.07.2026**
(21) Application number: 24876502.6
(22) Date of filing: 08.10.2024
(51) Int. Cl.: B65G 1/04

(54) **THREE-DIMENSIONAL GOODS SORTING SYSTEM**

(30) Priority: 14.10.2023 CN 202311328663
(71) Applicant: Wuxi Hongyi Intelligent Technology Co., Ltd, Wuxi, Jiangsu 214000 (CN)
(72) Inventor: XI, Qing, Wuxi, Jiangsu 214000 (CN); CHEN, Quyan, Wuxi, Jiangsu 214000 (CN)
(74) Representative: Miller, Ronald Anthony
(86) International application number: PCT/CN2024/123401
(87) International publication number: WO 2025/077688

(57) **Abstract**

A three-dimensional goods sorting system, comprising a distribution unit (1), a package-feeding machine (3) and a goods shelf (2). The distribution unit (1) comprises: a frame (7); a track arranged on the frame (7) as a closed running path having at least one section of a linear path; stators (11) located on the frame (7) and arranged at intervals along the running path; a plurality of carrier trolley assemblies located on the track and hinged pairwise in the direction of the running path; lifting and carrying mechanisms (4) fixedly connected to the carrier trolley assemblies and conveying goods in a vertical direction and a horizontal direction; and movers (12) fixedly arranged on the lifting and carrying mechanisms (4), the movers (12) and the stators (11) cooperating to form linear motors to drive the lifting and carrying mechanisms (4) to run along the running path of the track along with the carrier trolley assemblies.

## Description

### TECHNICAL FIELD

The present invention relates to the technical field of goods sorting, and specifically to a three-dimensional goods sorting system.

### BACKGROUND

A put wall is an intelligent electronic apparatus used in the put stage of secondary sorting in e-commerce warehousing. Its main working principle is as follows. Goods at a parcel induction position are fed into a carrier mechanism of the put wall via a parcel induction device. A computer vision system identifies the goods and determines destination locations of the goods. Then, the carrier mechanism sorts and puts the goods into the respective delivery areas. Currently, common problems with put walls are as follows. First, the number of carrier mechanisms is limited by their running path. For example, when the running path is a circular path, increasing the number of carrier mechanisms requires increasing the radius of the circular path. However, the extent to which the radius can be increased is limited by the power load of the corresponding rotary driving mechanism (i.e., a mechanism that drives the carrier mechanism to run along the circular path), resulting in a limited running speed and affecting the sortation efficiency. Second, a driving mechanism that drives the carrier mechanism to run along the running path is typically a transmission belt, a transmission chain, or other conveyor mechanisms. Over long-term use, the belt or the chain in the driving mechanism will deform to a certain extent and needs to be tensioned regularly, otherwise the positioning error of the carrier mechanism will accumulate, resulting in a mismatch with the parcel induction position and the position of the sortation (retrieval) bin, affecting the accurate operation of the system. In addition, the probability of such an error accumulation increases with the total length of the running path, limiting the scalability of the design size of the sortation unit.

### SUMMARY

To solve the disadvantages in the prior art, the present invention provides a three-dimensional goods sorting system to improve the sortation efficiency and avoid the problem that the normal operation of the system is affected by a mismatch of the carrier mechanism with the parcel induction position and the position of the retrieval bin due to long-term operation of the sortation unit.

The following technical solutions are employed in the present invention.

A three-dimensional goods sorting system is provided, including a sortation unit, a parcel induction device, and shelves, where the sortation unit includes:
a frame;
a track, where the track is arranged on the frame as a closed running path, and the closed running path has at least one linear path segment;
stators, where the stators are located on the frame and arranged at intervals along the closed running path;
a plurality of carrier carriage assemblies, where the plurality of carrier carriage assemblies are located on the track and two adjacent ones of the plurality of carrier carriage assemblies are hingedly connected along the closed running path;
lifting carrier mechanisms, where the lifting carrier mechanisms are fixedly connected to the plurality of carrier carriage assemblies respectively and are configured to convey goods in a vertical direction and a horizontal direction; and
movers, where the movers are fixedly arranged on the lifting carrier mechanisms respectively,
where the movers are configured to cooperate with the stators to form linear motors to drive the lifting carrier mechanisms to run along the closed running path of the track along with the plurality of carrier carriage assemblies.

As a further technical solution,
each of the stators includes a stator core and a coil wound around the stator core;
each of the movers includes an iron plate and an aluminum plate connected to the iron plate; and
a first side surface of the aluminum plate faces a stator of the stators, a second side surface of the aluminum plate is in close contact with a first side surface of the iron plate, and a second side surface of the iron plate is fixedly connected to a respective one of the lifting carrier mechanisms.

A limiting device is provided between the aluminum plate and the stator to prevent each of the movers from being attracted to the stator.

The track includes an upper guide rail and a lower guide rail, the upper guide rail and the lower guide rail are arranged corresponding to each other in the vertical direction, the upper guide rail is fixedly connected to an upper end of the frame, and the lower guide rail is fixedly connected to a lower end of the frame.

Each of the upper guide rail and the lower guide rail is provided with two guide grooves, the two guide grooves are symmetrically arranged in a left-right direction, and each of the two guide grooves has two inclined surfaces symmetrically arranged in the vertical direction.

Each of the plurality of carrier carriage assemblies includes an upper carrier carriage and a lower carrier carriage, the upper carrier carriage is located on the upper guide rail, the lower carrier carriage is located on the lower guide rail, and the upper carrier carriage and the lower carrier carriage are corresponding to each other in the vertical direction and are connected by a vertical connection member.

Each of the upper carrier carriage and the lower carrier carriage includes a carriage cover, one or more guide wheel sets are arranged in the carriage cover, the one or more guide wheel sets each include four guide wheels symmetrically arranged in the left-right direction and the vertical direction, axles of the four guide wheels are arranged inclinedly, two guide wheels corresponding to each other in the vertical direction of the four guide wheels are respectively in contact with the two inclined surfaces symmetrically arranged in the vertical direction, the two inclined surfaces and axles of the two guide wheels in contact with the two inclined surfaces have an identical inclination angle, and the identical inclination angle is 45°.

The frame is provided with a plurality of sensing devices, the plurality of sensing devices are configured to acquire positions of the lifting carrier mechanisms, and the three-dimensional goods sorting system includes a control module, and the control module is configured to acquire running speeds of the lifting carrier mechanisms according to information of the positions and corresponding sampling times.

Each of the lifting carrier mechanisms includes one or more carrier platforms, and the one or more carrier platforms are spaced apart in the vertical direction or adjacently arranged in the horizontal direction to increase a horizontal carrier area, and
each of the lifting carrier mechanisms further includes a driving motor, a transmission mechanism, a vertical slide rail, and a bracket, where the driving motor is configured to drive, through the transmission mechanism, the one or more carrier platforms to move vertically along the vertical slide rail and allow the one or more carrier platforms to be started or stopped at any height;
the bracket serves as a support member of each of the lifting carrier mechanisms and is arranged on a rear surface of each of the lifting carrier mechanisms in the vertical direction and is configured to support the driving motor and the vertical slide rail; and
the bracket is fixedly connected to a respective one of the movers.

The stators are arranged at equal intervals along the at least one linear path segment.

The parcel induction device is located at the at least one linear path segment, and a conveying direction of the parcel induction device and a running direction of the lifting carrier mechanisms along the at least one linear path segment form an angle ranging from 30° to 70°.

The present invention has the following advantages.

In the present invention, a linear motor is used to drive the lifting carrier mechanism to run along the closed running path. Compared with a conventional method using a belt or chain conveyor mechanism, the use of the linear motor according to the present invention not only solves the problems of mismatch between the parcel induction position and the position of the lifting carrier mechanism for parcel loading and mismatch between the position of the lifting carrier mechanism for parcel unloading and the position of the retrieval bin due to error accumulation caused by deformation of the belt or chain conveyor mechanism after long-term operation, but also greatly increases the running speed. In addition, the scalability of the design of the size of the sortation unit is improved. Because the impact of conveyor chain and belt deformation is avoided, the design of the size of the track at least in a length direction (of an oval shape) is not limited (by driving power), i.e., the length expansion does not affect the running speed, fully meeting the sorting requirements in large-scale warehousing.

The setting of the angle to 30° to 70° for the parcel induction device in the present invention may ensure that a speed component of the parcel induction speed in the running direction along the linear path segment is consistent with the running speed of the lifting carrier mechanism for parcel loading, and therefore ensure a correct posture of the goods on the carrier platform after parcel induction, and prevent posture deviation of or damage to the parcels of goods due to impact, thereby achieving gentle sorting. This also avoids the problem in the prior art that because the parcel induction speed needs to be much higher than the running speed of the lifting carrier mechanism in order to ensure smooth parcel loading, the running speed of the lifting carrier mechanism is limited, leading to further reduced efficiency, and the problem in the prior art that vertical parcel induction is only suitable for sorting of goods of a small size.

Additional features and advantages of the present invention will be set forth in the description which follows, or may be learned through practice of the present invention.

### BRIEF DESCRIPTION OF THE DRAWINGS

FIG. 1 is a top view of an embodiment of the present invention.
FIG. 2 is a simplified front view of a sortation unit according to an embodiment of the present invention.
FIG. 3 is a front view of the sortation unit in FIG. 1.
FIG. 4 is a schematic structural assembled view of a lifting carrier mechanism and a mover according to an embodiment of the present invention.
FIG. 5 is a schematic diagram of a mounting structure of a stator according to an embodiment of the present invention.
FIG. 6 is a front view of another lifting carrier mechanism according to an embodiment of the present invention, different from that shown in FIG. 4.
FIG. 7 is a schematic structural assembled view of a carrier carriage and a guide rail according to an embodiment of the present invention.
FIG. 8 is a schematic three-dimensional structural diagram of an embodiment of the present invention.

In the drawings, the reference numerals respectively represent: 1. sortation unit; 2. shelf; 3. parcel induction device; 4. lifting carrier mechanism; 5. upper carrier carriage; 6. upper guide rail; 7. frame; 8. sensing device; 9. lower guide rail; 10. vertical connection member; 11. stator; 12. mover; 13. U-shaped mounting bracket; 14. limiting device; 15. lower carrier carriage; 16. hinge shaft; 121. iron plate; 122. aluminum plate; 21. retrieval bin; 41. driving motor; 42. transmission chain; 43. vertical slide rail; 44. carrier platform; 45. bracket; 51. carriage cover; 52. axle; 53. guide wheel; 61. upper inclined surface; 62. lower inclined surface.

### DETAILED DESCRIPTION OF THE EMBODIMENTS

Specific embodiments of the present invention will be described below with reference to the accompanying drawings.

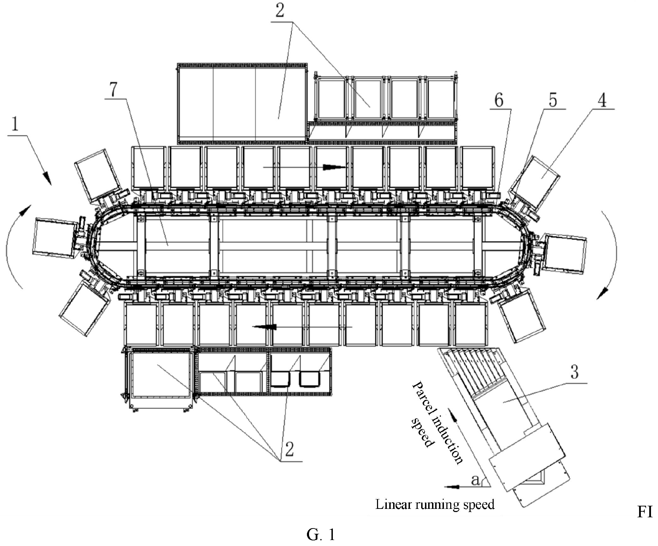

Referring to FIG. 1, FIG. 2, FIG. 3, and FIG. 8, an embodiment provides a three-dimensional goods sorting system, which includes a sortation unit 1, a parcel induction device 3, and shelves 2. The sortation unit 1 includes a track, a frame 7, stators 11, movers 12, carrier carriage assemblies, and lifting carrier mechanisms 4.

The track is arranged on the frame 7 as a closed running path, and the closed running path has at least one linear path segment. Specifically, the closed running path may be annular, preferably oval. Specifically, the track may include an upper guide rail 6 and a lower guide rail 7 arranged corresponding to each other in a vertical direction. The upper guide rail 6 is fixedly connected to an upper end of the frame 7. The lower guide rail 9 is fixedly connected to a lower end of the frame 7.

The stators 11 are located on the frame 7 and are arranged at intervals along the closed running path. Specifically, the stators 11 may be arranged on vertical columns of the frame 7.

The plurality of carrier carriage assemblies are located on the track and two adjacent ones of the plurality of carrier carriage assemblies are hingedly connected along the closed running path. Each of the plurality of carrier carriage assemblies specifically includes an upper carrier carriage 5 located on the upper guide rail 6 and a lower carrier carriage 15 located on the lower guide rail 9. The upper carrier carriage 5 and the lower carrier carriage 15 are corresponding to each other in the vertical direction and are connected by a vertical connection member 10. A hinge point is provided on each of two sides of a top end of each of the upper carrier carriage and the lower carrier carriage. Two adjacent ones of the plurality of carrier carriage assemblies are detachably connected to each other by the hinge points and hinge shafts 16.

The lifting carrier mechanisms 4 are fixedly connected to the plurality of carrier carriage assemblies respectively and are configured to convey goods in the vertical direction and a horizontal direction. Specifically, each of the lifting carrier mechanisms 4 may be fixedly connected to the respective carrier carriage assembly through a vertical connection member 10, and after the connection, an upper carrier carriage and a lower carrier carriage are respectively provided at an upper end and a lower end of each lifting carrier mechanism 4 to ensure that a supporting force in the vertical direction received by each lifting carrier mechanism 4 during operation is kept balanced.

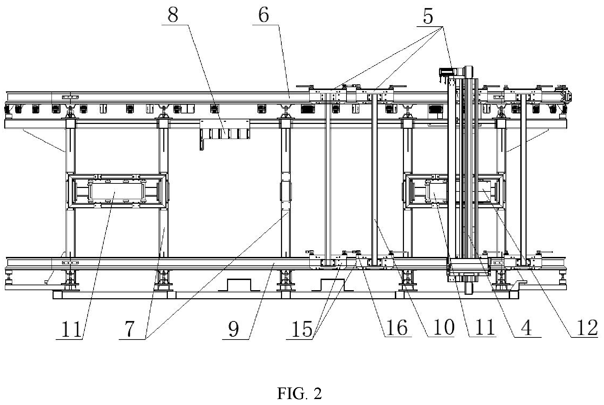

As shown in FIG. 2, FIG. 3, and FIG. 4, the movers 12 are fixedly arranged on the lifting carrier mechanisms 4 respectively, the movers 12 are configured to cooperate with the stators 11 to form linear motors, and each of the movers 12 is configured to move linearly relative to the corresponding stator 11 to drive the respective lifting carrier mechanism 4 to run along the closed running path of the track along with the respective carrier carriage assembly, either clockwise as shown by four arrows around an outer ring of the sortation unit 1 in FIG. 1, or counterclockwise.

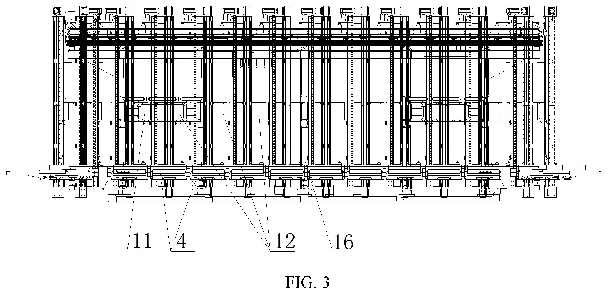

It should be noted that FIG. 3 is a front view of the structure of the sortation unit 1 in FIG. 1. To show the structure more clearly, compared with FIG. 3, FIG. 2 shows only one lifting carrier mechanism 4 and some carrier carriage assemblies, with accessory structures such as control lines being not shown.

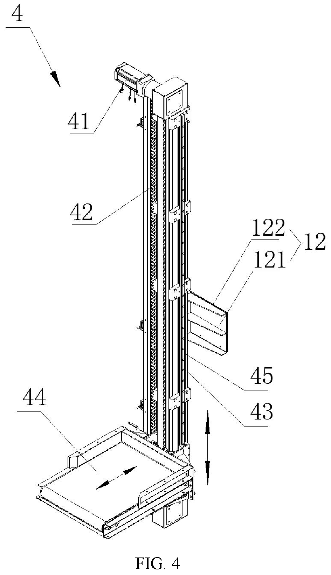

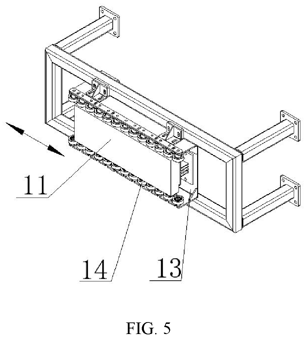

Referring to FIG. 4 and FIG. 5, each of the stators 11 includes a stator core and a coil wound around the stator core, each of the movers 12 includes an iron plate 121 and an aluminum plate 122 connected to the iron plate 121, a first side surface of the aluminum plate 122 faces a stator 11 of the stators 11, a second side surface of the aluminum plate 122 is in close contact with a first side surface of the iron plate 121, and a second side surface of the iron plate 121 is fixedly connected to a respective one of the lifting carrier mechanisms 4.

In this embodiment, the iron plate 121 and the aluminum plate 122 connected to the iron plate 121 are used to form a secondary board of the motor, and an energization direction of the coil in the stator 11 arranged along the closed running path is controlled, so that the mover 12 moves linearly relative to the stator 11 under a magnetic force, causing the lifting carrier mechanisms 4 connected together by the carrier carriage assemblies to continuously move along the closed running path. Compared with a mover of a conventional linear motor, the mover of this embodiment has a simple structure and low costs.

The stators 11 are preferably arranged at equal intervals along the at least one linear path segment.

As shown in FIG. 5, a limiting device 14 is provided between the aluminum plate 122 and the stator 11 to prevent each of the movers from being attracted to the stator 11. The direction in which the mover 12 moves linearly relative to the stator 11 after the coil wound around the stator core is energized is as indicated by an arrow in FIG. 5. It can be understood that the limiting device 14 prevents the mover from being attracted to the stator in a direction perpendicular to the direction in which the mover 12 moves linearly relative to the stator 11.

The stator 11 may be fixedly mounted by a U-shaped mounting bracket 13. The limiting device 14 may include two limiting wheel sets, which may be respectively arranged on an upper side and a lower side of the U-shaped mounting bracket 13.

As shown in FIG. 4, each of the lifting carrier mechanisms includes one or more carrier platforms 44 configured to convey goods in the vertical direction and the horizontal direction. The vertical direction and the horizontal direction are indicated by arrows in FIG. 4.

The lifting carrier mechanism is a mature mechanical device in the art, which may be implemented using a combination of a commonly used drive transmission mechanism and a commonly used conveyor drum or may be commercially available.

As shown in FIG. 4, the lifting carrier mechanism 4 in this embodiment specifically includes a driving motor 41, a transmission chain 42, a carrier platform 44, a vertical slide rail 43, and a bracket 45. The driving motor 41 is configured to drive, through the transmission chain 42, the carrier platform 44 to move vertically along the vertical slide rail 43 and allow the carrier platform 44 to be started or stopped at any height, so that goods can be sorted and put into retrieval bins of any height and then retrieved from the retrieval bins.

The bracket 45 serves as a support member of each of the lifting carrier mechanisms 4 and is arranged on a rear surface of each of the lifting carrier mechanisms 4 in the vertical direction and is configured to support the driving motor 41, the vertical slide rail 43, and other fixed members. Specifically, the mover 12 as a part fixedly connected to the lifting carrier mechanism 4 may be fixedly connected to the bracket 45. It can be understood that the bracket 45 and the vertical connection member 10 may also be configured as one piece.

Specifically, the carrier platform 44 may be a roller or belt conveyor.

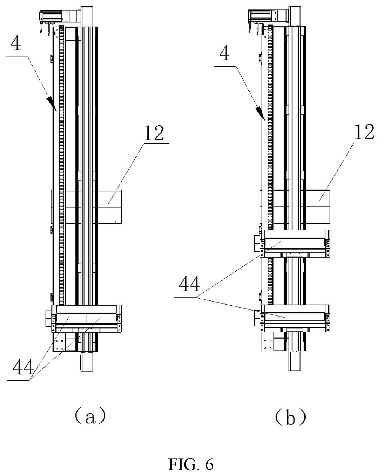

Referring to FIG. 6, to improve the conveyance efficiency, two or more carrier platforms 44 may be provided along the horizontal or vertical direction in this embodiment. As shown in (a) of FIG. 6, two carrier platforms 44 are adjacently arranged in the horizontal direction to increase a horizontal carrier area. The two carrier platforms 44 can be flexibly combined to carry goods of different sizes. In practice, for goods of a small size, only one of the carrier platforms needs to be turned on for parcel loading and unloading, and for goods of a large size, the two carrier platforms 44 may be turned on at the same time for parcel loading and unloading. As shown in (b) of FIG. 6, two carrier platforms 44 are spaced apart in the vertical direction, so that the density of goods carried in the vertical direction can be increased, thereby improving the efficiency.

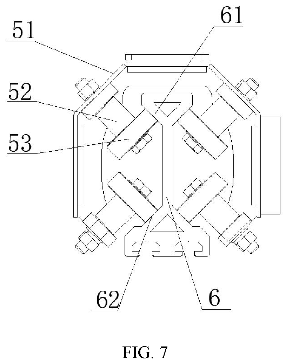

Referring to FIG. 2 and FIG. 7, in this embodiment, the upper guide rail 6 and the lower guide rail 9 have the same structure. Each of the upper guide rail 6 and the lower guide rail 9 is provided with two guide grooves, and the two guide grooves are symmetrically arranged in a left-right direction. Each of the two guide grooves has two inclined surfaces symmetrically arranged in the vertical direction, namely, an upper inclined surface 61 and a lower inclined surface 62. Based on this, the connection between the upper carrier carriage 5 and the upper guide rail 6 and/or the connection between the lower carrier carriage 15 and the lower guide rail 9 are/is as follows.

Each of the upper carrier carriage and the lower carrier carriage includes a carriage cover 51. One or more guide wheel sets are arranged in the carriage cover 51. The one or more guide wheel sets each include four guide wheels 52 symmetrically arranged in the left-right direction and the vertical direction. Axles of the four guide wheels 52 are arranged inclinedly. Two guide wheels 52 corresponding to each other in the vertical direction of the four guide wheels 52 are respectively in contact with the two inclined surfaces symmetrically arranged in the vertical direction, i.e., the upper inclined surface 61 and the lower inclined surface 62. The two inclined surfaces and axles of the two guide wheels in contact with the two inclined surfaces have an identical inclination angle. The identical inclination angle is 45° (relative to the horizontal or vertical direction), so that forces received by the upper guide rail and the lower guide rail in the horizontal direction counteract with each other, and forces received by the upper guide rail and the lower guide rail in the vertical direction counteract with each other, resulting in zero pressure on the track and achieving silent operation.

Preferably, two guide wheel sets are provided and are respectively arranged at two ends of the carriage cover 51 in the running direction.

Referring to FIG. 2, the frame 7 is provided with a plurality of sensing devices 8 configured to acquire positions of the lifting carrier mechanisms 4, and the three-dimensional goods sorting system includes a control module configured to acquire running speeds of the lifting carrier mechanisms according to information of the positions and corresponding sampling times. In this embodiment, because a driving mode based on a linear motor is used and the speed cannot be measured using an encoder, the sensing devices are provided to calculate speed information according to position information.

Specifically, the sensing devices 8 may be photoelectric switches (sensors), which are preferably arranged on a linear path segment to improve the precision of distance sampling.

Compared with a conventional method using a belt or chain conveyor mechanism, the use of a linear motor for driving in this embodiment not only solves the problems of mismatch between the parcel induction position and the position of the lifting carrier mechanism for parcel loading and mismatch between the position of the lifting carrier mechanism for parcel unloading and the position of the retrieval bin due to error accumulation caused by deformation of the belt or chain conveyor mechanism after long-term operation, but also greatly increases the running speed. In addition, the scalability of the design of the size of the system is improved. Because the impact of conveyor chain and belt deformation is avoided, the size of the track can be infinitely expanded theoretically, at least in a length direction (of an oval shape), to meet sorting requirements in large-scale warehousing.

Referring to FIG. 1, the three-dimensional goods sorting system of this embodiment includes one or more parcel induction devices 3 arranged at the at least one linear path segment, and a conveying direction of each parcel induction device 3 and a running direction of the lifting carrier mechanisms along the at least one linear path segment form an angle a ranging from 30° to 70°.

In the prior art, in general, vertical parcel induction is used, i.e., the angle between a parcel induction direction of the parcel induction device and the running direction of the lifting carrier mechanisms is 90°, which not only makes the parcels susceptible to damage from impact, but also requires a very high parcel induction speed, which needs to be much higher than the running speed of the lifting carrier mechanism in order to ensure smooth parcel loading. Therefore, to ensure smooth parcel loading, the running speed of the lifting carrier mechanism needs to be limited, which further restricts the sorting efficiency of the sortation unit. In addition, vertical parcel induction is only suitable for sorting of goods of a small size. The setting of the angle a to 30° to 70° for the parcel induction device in this embodiment ensures that a speed component of the parcel induction speed in the running direction along the linear path segment is consistent with the running speed of the lifting carrier mechanism along the linear path segment, and therefore can ensure a stable posture of the goods on the carrier platform of the lifting carrier mechanism after parcel induction, and prevent posture deviation of or damage to the parcels of goods due to impact, thereby achieving gentle sorting.

Specifically, a spacing between the one or more parcel induction devices 3 is an integer multiple of a spacing between two adjacent carrier carriages.

Specifically, the parcel induction device 3 may be a roller or belt conveyor equipment.

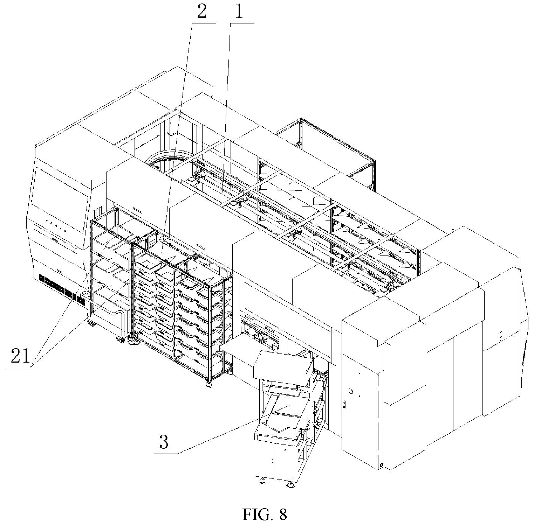

As shown in FIG. 8, in this embodiment, the shelves 2 are arranged on the outer ring of the sortation unit 1, each shelf 2 is provided with retrieval bins 21, and a receiving structure in each retrieval bin 21 may be configured as a chute type or an ordinary tote type according to retrieval requirements. The carrier platform of the lifting carrier mechanism may be started or stopped at any height, so that goods can be sorted and put into the retrieval bins 21 of any height and then retrieved from the retrieval bins 21. The retrieval bins 21 in each shelf 2 may have the same or different heights to accommodate parcels of different heights and sizes for sortation. The sizes of the retrieval bins on the shelves can be arbitrarily combined. Therefore, this embodiment can also be applied to an e-commerce return process. When the lifting carrier mechanism for parcel loading moves to the parcel induction position, referring to FIG. 1, a center line of the parcel induction speed is aligned with a center line of the carrier platform of the lifting carrier mechanism, and parcel loading can be performed. When the lifting carrier mechanism for parcel unloading moves to the position of the corresponding retrieval bin 21, the carrier platform can convey the goods for parcel unloading, thereby achieving the sortation of the goods.

Those of ordinary skill in the art can understand that the above descriptions are merely preferred embodiments of the present invention and are not intended to limit the present invention. Although the present invention has been described in detail with reference to the foregoing embodiments, those skilled in the art can still modify the technical solutions described in the foregoing embodiments, or make equivalent replacements to some of the technical features. Any modification, equivalent replacement, or improvement made without departing from the spirit and principle of the present invention shall fall within the scope of protection of the present invention.

## Claims

1. A three-dimensional goods sorting system, **characterized by** comprising a sortation unit, a parcel induction device, and shelves, wherein the sortation unit comprises:
a frame;
a track, wherein the track is arranged on the frame as a closed running path, and the closed running path has at least one linear path segment;
stators, wherein the stators are located on the frame and arranged at intervals along the closed running path;
a plurality of carrier carriage assemblies, wherein the plurality of carrier carriage assemblies are located on the track and two adjacent ones of the plurality of carrier carriage assemblies are hingedly connected along the closed running path;
lifting carrier mechanisms, wherein the lifting carrier mechanisms are fixedly connected to the plurality of carrier carriage assemblies respectively and are configured to convey goods in a vertical direction and a horizontal direction; and
movers, wherein the movers are fixedly arranged on the lifting carrier mechanisms respectively,
wherein the movers are configured to cooperate with the stators to form linear motors to drive the lifting carrier mechanisms to run along the closed running path of the track along with the plurality of carrier carriage assemblies;
the track comprises an upper guide rail and a lower guide rail, the upper guide rail and the lower guide rail are arranged corresponding to each other in the vertical direction, the upper guide rail is fixedly connected to an upper end of the frame, and the lower guide rail is fixedly connected to a lower end of the frame;
each of the upper guide rail and the lower guide rail is provided with two guide grooves, the two guide grooves are symmetrically arranged in a left-right direction, and each of the two guide grooves has two inclined surfaces symmetrically arranged in the vertical direction;
each of the plurality of carrier carriage assemblies comprises an upper carrier carriage and a lower carrier carriage, the upper carrier carriage is located on the upper guide rail, the lower carrier carriage is located on the lower guide rail, and the upper carrier carriage and the lower carrier carriage are corresponding to each other in the vertical direction and are connected by a vertical connection member;
each of the upper carrier carriage and the lower carrier carriage comprises a carriage cover, one or more guide wheel sets are arranged in the carriage cover, the one or more guide wheel sets each comprise four guide wheels symmetrically arranged in the left-right direction and the vertical direction, axles of the four guide wheels are arranged inclinedly, two guide wheels corresponding to each other in the vertical direction of the four guide wheels are respectively in contact with the two inclined surfaces symmetrically arranged in the vertical direction, the two inclined surfaces and axles of the two guide wheels in contact with the two inclined surfaces have an identical inclination angle, and the identical inclination angle is 45°;
each of the lifting carrier mechanisms comprises one or more carrier platforms, the one or more carrier platforms are spaced apart in the vertical direction or adjacently arranged in the horizontal direction to increase a horizontal carrier area, and each of the lifting carrier mechanisms further comprises a driving motor, a transmission mechanism, a vertical slide rail, and a bracket, wherein the driving motor is configured to drive, through the transmission mechanism, the one or more carrier platforms to move vertically along the vertical slide rail and allow the one or more carrier platforms to be started or stopped at any height, the bracket serves as a support member of each of the lifting carrier mechanisms and is arranged on a rear surface of each of the lifting carrier mechanisms in the vertical direction and is configured to support the driving motor and the vertical slide rail, and the bracket is fixedly connected to a respective one of the movers.

2. The three-dimensional goods sorting system according to claim 1, **characterized in that**
each of the stators comprises a stator core and a coil wound around the stator core;
each of the movers comprises an iron plate and an aluminum plate connected to the iron plate; and
a first side surface of the aluminum plate faces a stator of the stators, a second side surface of the aluminum plate is in close contact with a first side surface of the iron plate, and a second side surface of the iron plate is fixedly connected to a respective one of the lifting carrier mechanisms.

3. The three-dimensional goods sorting system according to claim 2, **characterized in that** a limiting device is provided between the aluminum plate and the stator to prevent each of the movers from being attracted to the stator.

4. The three-dimensional goods sorting system according to claim 1, **characterized in that** the frame is provided with a plurality of sensing devices, the plurality of sensing devices are configured to acquire positions of the lifting carrier mechanisms, and the three-dimensional goods sorting system comprises a control module, and the control module is configured to acquire running speeds of the lifting carrier mechanisms according to information of the positions and corresponding sampling times.

5. The three-dimensional goods sorting system according to claim 1, **characterized in that** the stators are arranged at equal intervals along the at least one linear path segment.

6. The three-dimensional goods sorting system according to claim 1, **characterized in that** the parcel induction device is located at the at least one linear path segment, and a conveying direction of the parcel induction device and a running direction of the lifting carrier mechanisms along the at least one linear path segment form an angle ranging from 30° to 70°.
